# EUROPEAN PATENT APPLICATION

(11) **EP 2 896 852 A1**
(43) Date of publication of application: **22.07.2015**
(21) Application number: 14151611.2
(22) Date of filing: 17.01.2014
(51) Int. Cl.: F16F 1/12, F16L 3/205

(54) **Vibration insulation mount**

(71) Applicant: Ford Otomotiv Sanayi Anonim Sirketi, 34885 Sancaktepe/Istanbul (TR); FORD MOTOR COMPANY, Dearborn, MI 48126 (US)
(72) Inventor: Öztürk, Mehmet, Rumelihisarüstü / Sariyer / ISTANBUL (TR); Alkan, Hakan, Tuzla / Istanbul (TR); Kaya, Yasar, Pendik / Istanbul (TR); Düzenl, Soner, Izmit / Kocaeli (TR)
(74) Representative: Illing, Rolf

(57) **Abstract**

The present invention relates to a vibration insulation mount for mounting a first member (3) to a second member (5) and for reducing the transmission of vibrations between said first and second members (3, 5), the vibration insulation mount comprising:
first mounting means (2) for mounting to said first member (3);
second mounting means (4) for mounting to said second member (5);
spring means (7) arranged between said first and second mounting means (2, 4) and providing a spring force between said first and second mounting means (2, 4);
wherein said first and second mounting means (2, 4) are slideably connected with each other and are slideable relative to each other in an axial direction extending between said first and second mounting means (2, 4),
wherein the axial movement is restricted between a maximum and a minimum axial distance of said first and second mounting means (2, 4).

The present invention also relates to an arrangement of a first member (3) and a second member (5).

## Description

The present invention generally relates to a vibration insulation mount for mounting a first member to a second member. The present invention further relates to an arrangement comprising a first member and a second member.

There is often a need to mechanically connect a first member to a second member wherein at least one of the two members is movable and, at the same time, to avoid physical damage of the two members which results from vibrations of at least one of the two members. Especially, when the one member is rigidly connected with the second member, e. g. by welding, the moving or vibrations of one of the two members can cause deformation, cracks, and damage to the other member due to the rigid connection.

Generally, vibration insulation mounts which are able to mechanically connect two members and to reduce the transmission of vibrations between the two members are known in the related art. However, these vibration insulation mounts often have complex designs that prevent easy servicing, for example, easy removal, repair, and/or replacement of the components, i. e. the first and second members and/or the vibration insulation mount itself.

Against this background, an object of the present invention is to provide an improved vibration insulation mount for mounting a first member to a second member and an arrangement of the first and second members having a simple and modular design that facilitates easy servicing of the components. In order to have the design as simple as possible the vibration insulation mount shall comprise as few parts as possible. Further, the vibration insulation mount shall protect the first and second members against deformation, cracks, damage and the like caused by movements of the first and second members relative to each other.

These objects are achieved by a vibration insulation mount having the features of claim 1 and by an arrangement having the features of claim 7. Further, particularly advantageous embodiments of the invention are disclosed in the respective dependent claims.

It should be noted that the individual features listed in the description below can be combined in any technically meaningful way with each other and show further embodiments of the invention. The description of the invention is additionally characterized and specified particularly in connection with the figures.

According to the present invention a vibration insulation mount for mounting a first member to a second member and for reducing the transmission of vibrations between said first and second members comprises first mounting means for mounting to said first member, second mounting means for mounting to said second member, spring means arranged between said first and second mounting means and providing a spring force between said first and second mounting means, wherein said first and second mounting means are slideably connected with each other and are slideable relative to each other in an axial direction extending between said first and second mounting means, wherein the axial movement is restricted between a maximum and a minimum axial distance of said first and second mounting means. Thus, with a minimum of components the vibration insulation mount according to the present invention provides a mechanical connection between the first and second members which is achieved by the mechanical restriction between a maximum and a minimum axial distance of the first and second mounting means. Further, the transmission of vibrations between said first and second members is reduced due to the spring force acting between the first and second mounting means allowing a movement of the first and second mounting means relative to each other which is affected only by the stiffness of the spring means. Preferably, the spring means, such as a helical spring, a leaf spring, a disc spring and the like, has a certain stiffness in the axial direction extending between the first and second mounting means. Thus, the vibration insulation mount according to the present invention protects the first and second members against deformation, cracks, damage and the like caused by movements of the first and second members relative to each other.

According to an advantageous embodiment of the present invention the first mounting means is clamp-shaped and configured to encompass the first member on its outer periphery. In this manner, an easy mountable connection between the first member and the first mounting means is achieved. Further, this configuration is conveniently adaptable to different types of peripheral shapes of the first member.

According to another advantageous embodiment of the present invention the second mounting means is a bolt configured to couple the first mounting means to the second member. Again, the bolted connection between the first mounting means and the second member is easy mountable and likewise serviceable.

According to yet another advantageous embodiment of the present invention the first mounting means is divided into two parts which are connected to each other via at least one sliding bolt that slides within an elongated hole formed in at least one of the two parts, wherein the longitudinal axis of the elongated hole is aligned substantially parallel to the axial direction extending between the first and second mounting means. In this manner, additional movability of the first and second mounting means in the axial direction is provided without being affected by the spring means.

According to yet another advantageous embodiment of the present invention the spring means is arranged concentrically or symmetrically about the axial direction extending between the first and second mounting means. For example, a single coaxial spring can be used or multiple springs arranged symmetrically about the axial direction. In the first case, the spring means is preferably arranged coaxially to the second mounting means which results in a very compact design of the vibration insulation mount.

According to yet another advantageous embodiment of the present invention the second mounting means provides guidance to the first mounting means in the axial direction extending between the first and second mounting means, i. e. the sliding movement of the first mounting means relative to the second mounting means is guided by the second mounting means. In this manner, a movement of the first and second mounting means relative to each other is allowed in the axial direction whereas a movement perpendicular to the axial direction is substantially prevented by the guidance of the second mounting means, thus giving a stable, yet flexible connection between the first and second mounting means in the axial direction. According to another aspect of the present invention an arrangement is provided comprising a first member and a second member, wherein the first and the second members are connected with each other by means of a vibration insulation mount according to any above-described embodiment. Preferably, the first member is pipe-or tube-shaped having a cylindrical outer periphery and the second member is a bracket.

Further features and advantages of the present invention will become apparent from the following description of a non-limiting embodiment of the invention which will be explained below with reference to the drawing. In this drawing:
- FIG. 1: shows a perspective view of a vibration insulation mount according to an exemplary embodiment of the present invention,
- FIG. 2: shows a side view of the vibration insulation mount of FIG. 1, and
- FIG. 3: shows a sectional view of the vibration insulation mount of FIG. 1 taken along line A-A in FIG. 2.

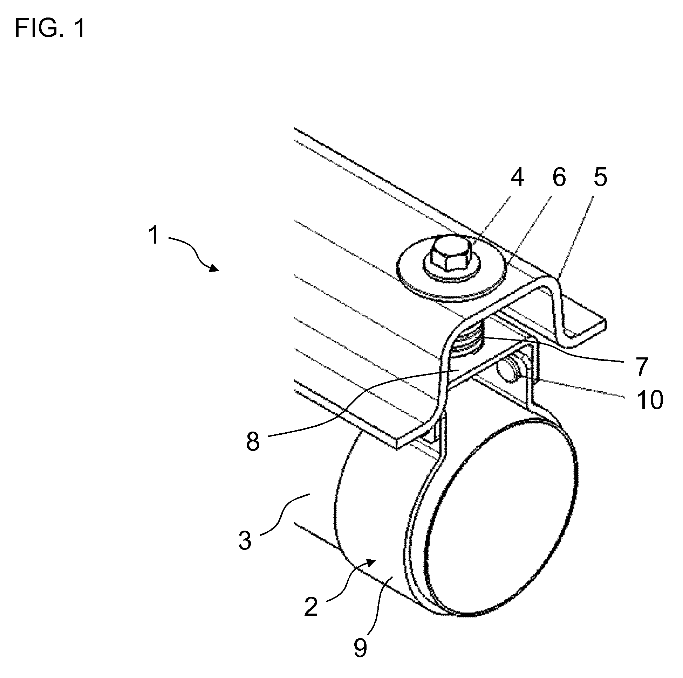

FIG. 1 shows a perspective view of a vibration insulation mount 1 according to an exemplary embodiment of the present invention. As can be seen in FIG. 1, the vibration insulation mount 1 comprises a first mounting means 2 in the form of a clamp for mounting to a first member 3 which is shown in the form of a pipe or tube having a cylindrical outer periphery, i. e. the clamp 2 encompasses the pipe 3 on its outer periphery. Further, the vibration insulation mount 1 shown in FIG. 1 comprises a second mounting means 4 in the form of a bolt for mounting to a second member 5 which is shown in the form of a bracket. The bolt 4 is configured to couple the clamp 2 to the bracket 5. In order to increase the surface of the load between the bolt 4 and the bracket 5 a washer 6 is interposed between the head of the bolt 4 and the bracket 5.

Furthermore, a spring means 7 in the form of one helical spring is arranged between the bolt 4 and the clamp 2. In the embodiment shown in FIG. 1, the spring 7 is arranged coaxially to the bolt 4 surrounding the latter. Thus, a spring force is acting between the bolt 4 and the clamp 2 pushing the bolt 4 and the clamp 2 apart from each other in an axial direction extending between the bolt 4 and the clamp 2.

The bolt 4 and the clamp 2 are slideably connected with each other. In particular, the bolt 4 and the clamp 2 are slideable relative to each other in the axial direction extending between the bolt 4 and the clamp 2. In fact, in the embodiment shown in FIG. 1 the axial direction extending between the bolt 4 and the clamp 2 corresponds to the axial extension of the bolt 4. As is apparent from FIG. 1, the clamp 2 is divided into two parts, an upper part 8 and a lower part 9 as will be explained in further detail below. In order to facilitate the relative movement between the bolt 4 and the clamp 2 the clamp 2 comprises an opening (not shown) in its upper part 8 through which the bolt 4 is passing. The clamp 2 is secured to the bolt 4 from below the upper part 8 thereof by a nut (not shown in FIG. 1). This configuration allows a movement of the bolt 4 and the clamp 2 relative to each other in the axial direction extending between the bolt 4 and the clamp 2. Thus, the bolt 4 provides guidance to the clamp 2 in the axial direction. Moreover, this configuration provides a restriction in the axial movement of the bolt 4 and the clamp 2. In particular, this configuration defines a maximum axial distance between the bolt 4 and the clamp 2. A minimum axial distance between the bolt 4 and the clamp 2 is defined by the minimum space the spring 7 occupies between the head of the bolt 4 and the upper part 8 of the clamp 2 when the spring 7 is completely compressed.

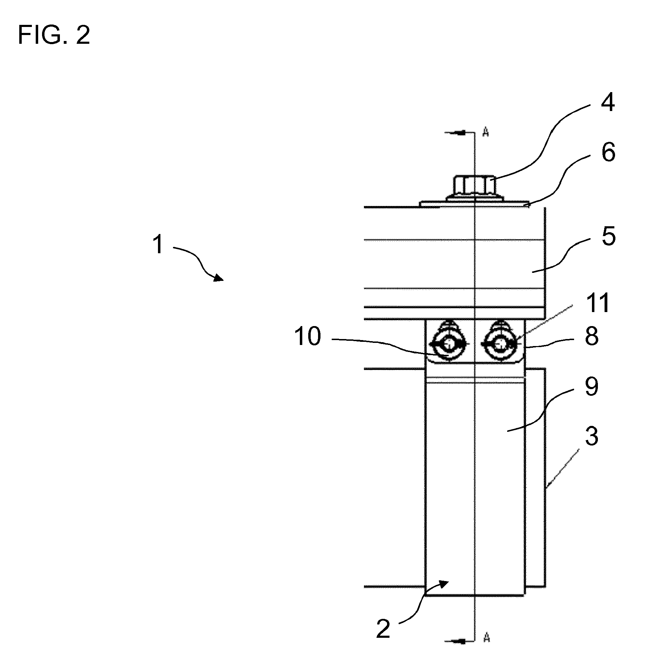

As already mentioned above, in the embodiment shown in FIG. 1, the clamp 2 is divided into an upper part 8 and a lower part 9. As is shown in FIG. 1, the upper part 8 of the clamp 2 has a U-shape, wherein the two ends of the U-shaped upper part 8 connect to two corresponding ends of the lower part 9 of the clamp 2 via a respective sliding bolt 10 (one of which is visible in FIG. 1). The two sliding bolts 10 slide within an elongated hole 11 (shown in FIG. 2) formed in the upper part 8 of the clamp 2. The longitudinal axis of said elongated hole 11 is aligned substantially parallel to the axial direction extending between the bolt 4 and the clamp 2.

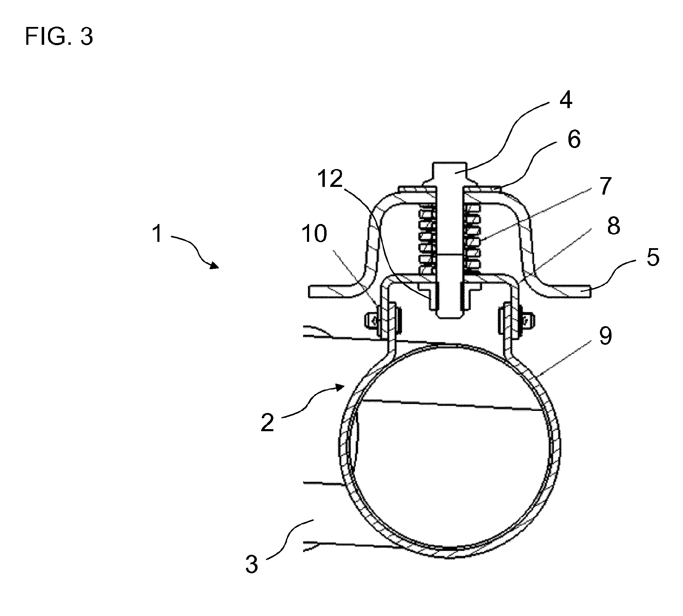

FIG. 2 shows a side view of the vibration insulation mount of FIG. 1 and FIG. 3 shows a sectional view of the vibration insulation mount of FIG. 1 taken along line A-A in FIG. 2.

In FIG. 3 the afore-mentioned nut 12 securing the clamp 2 to the bolt 4 from below the upper part 8 of the clamp 2 is visible.

The above described vibration insulation mount and the arrangement according to the present invention are not limited to the specific embodiments disclosed herein, but also encompass other embodiments having the same effect. It will be apparent to a skilled person in the art that various variations and modifications of the herein disclosed embodiments are possible within the spirit and scope of the present invention.

In a preferred embodiment the vibration insulation mount according to the present invention is used to connect a pipe with a bracket.

### List of reference numerals:

- 1: Vibration insulation mount
- 2: First mounting means
- 3: First member
- 4: Second mounting means
- 5: Second member
- 6: Washer
- 7: Spring means
- 8: Upper part of 2
- 9: Lower part of 2
- 10: Sliding bolt
- 11: Elongated hole
- 12: Nut

## Claims

1. A vibration insulation mount for mounting a first member (3) to a second member (5) and for reducing the transmission of vibrations between said first and second members (3, 5), the vibration insulation mount comprising:
first mounting means (2) for mounting to said first member (3);
second mounting means (4) for mounting to said second member (5);
spring means (7) arranged between said first and second mounting means (2, 4) and providing a spring force between said first and second mounting means (2, 4);
wherein said first and second mounting means (2, 4) are slideably connected with each other and are slideable relative to each other in an axial direction extending between said first and second mounting means (2, 4),
wherein the axial movement is restricted between a maximum and a minimum axial distance of said first and second mounting means (2, 4).

2. The vibration insulation mount according to claim 1, wherein said first mounting means (2) is clamp-shaped and configured to encompass said first member (3) on its outer periphery.

3. The vibration insulation mount according to claim 1 or 2, wherein said second mounting means (4) is a bolt configured to couple said first mounting means (2) to said second member (5).

4. The vibration insulation mount according to any of the preceding claims, wherein said first mounting means (2) is divided into two parts (8, 9) which are connected to each other via at least one sliding bolt (10) that slides within an elongated hole (11) formed in at least one of said two parts (8, 9), the longitudinal axis of said elongated hole (11) being aligned substantially parallel to said axial direction extending between said first and second mounting means (2, 4).

5. The vibration insulation mount according to any of the preceding claims, wherein said spring means (7) is arranged concentrically or symmetrically about said axial direction extending between said first and second mounting means (2, 4).

6. The vibration insulation mount according to any of the preceding claims, wherein said second mounting means (4) provides guidance to said first mounting means (2) in said axial direction extending between said first and second mounting means (2, 4).

7. An arrangement comprising a first member (3) and a second member (5), wherein said first member (3) and said second member (5) are connected with each other by means of a vibration insulation mount (1) according to any of the preceding claims.

8. The arrangement according to claim 7, wherein said first member (3) is pipe- or tube-shaped and said second member (5) is a bracket.
